Europäisches Patentamt

(19) **European Patent Office**

Office européen des brevets

(11) Veröffentlichungsnummer: **0 069 886**
**B1**

(12) **EUROPÄISCHE PATENTSCHRIFT**

(45) Veröffentlichungstag der Patentschrift:
02.01.85

(51) Int. Cl.³: **G 06 F 13/00**

(21) Anmeldenummer: **82105470.7**

(22) Anmeldetag: **22.06.82**

(54) **Prioritätsauswahleinrichtung.**

(30) Priorität: **03.07.81 DE 3126384**

(43) Veröffentlichungstag der Anmeldung:
**19.01.83 Patentblatt 83/3**

(45) Bekanntmachung des Hinweises auf die Patenterteilung:
**02.01.85 Patentblatt 85/1**

(84) Benannte Vertragsstaaten:
**AT FR GB IT NL**

(56) Entgegenhaltungen:
**GB - A - 2 044 499**
**US - A - 3 798 591**
**US - A - 4 237 534**

(73) Patentinhaber: **Siemens Aktiengesellschaft, Berlin und München Wittelsbacherplatz 2, D-8000 München 2 (DE)**

(72) Erfinder: **Geissdörfer, Werner, Dipl.-Ing., Iblherstrasse 2a, D-8000 München 83 (DE)**

BUNDESDRUCKEREI BERLIN

**Beschreibung**

Die Erfindung bezieht sich auf eine Prioritätsauswahleinrichtung nach dem Oberbegriff des Patentanspruchs 1.

In Datenverareitungsanlagen mit mehreren Elementen, die Operationsanforderungen an eine zentrale Steuerung richten können — beispielsweise also mit mehreren Prozessoren, die zu einem zentralen Speicher zugreifen — ist es notwendig, bei gleichzeitig eintreffenden oder vorliegenden Anforderungen von verschiedenen Elementen jeweils nur eine Anforderung auszuwählen. Die Entscheidung darüber wird in einer Prioritätsauswahleinrichtung getroffen, an die sich alle Elemente mit einem Anforderungssignal wenden müssen, wenn sie eine Anforderung stellen.

Bei einem handelsüblichen Prioritätsnetzwerk (z. B. Fairchild 100 165) sind die Prioritäten durch die Zuordnung der anfordernden Prozessoren zu den einzelnen Eingängen für die Anforderungssignale fest vorgegeben. Eine solche Prioritätszuweisung hat jedoch den Nachteil, daß ein Prozessor mit hoher Priorität und mit einer raschen Folge von Anforderungen über längere Zeit hinweg Zugriffe der anderen Prozessoren zu der zentralen Steuerung, beispielsweise zum Speicher, verhindern kann.

Durch die Firmendruckschrift der Siemens AG »SAB 8086 Family User's Manual« October 1979, insbesondere Seiten A 111 bis A 130 sind Anordnungen bekannt, bei denen zur Lösung der Prioritätsauswahlprobleme jedem Prozessor eines Multiprozessorsystems ein sogenannter Bus-Arbiter zugeordnet ist. Durch eine entsprechende Verbindung der Bus-Arbiter untereinander, gegebenenfalls unter Zuhilfenahme weiterer Bauteile ist es möglich, neben einer festen Prioritätszuweisung auch eine fortlaufende Vertauschung der Prioritäten zu erreichen und damit die vorher erwähnten Schwierigkeiten zu umgehen.

Eine Prioritätsauswahleinrichtung mit variabler Prioritätszuweisung ist auch aus US-A-3 798 591 bekannt. Die bekannte Einrichtung, bei der Anforderungssignale zu beliebigen Zeitpunkten eingehen dürfen, enthält ein Prioritätsnetzwerk, dessen Eingängen Multiplexer vorgeschaltet sind. Mit Hilfe der Multiplexer werden die Eingänge für die Anforderungssignale in einer nach jeder vorausgehenden Prioritätszuweisung veränderten Reihenfolge auf die Eingänge des Prioritätsnetzwerks durchverbunden. Die Steuerung der Multiplexer geschieht entsprechend dem jeweiligen Stand eines Binärzählers, der nach jeder Durchschaltung eines Anforderungssignals um eine Zähleinheit erhöht wird. Das Zählvolumen des Binärzählers entspricht der Anzahl der zugreifenden Elemente, d. h. der Anzahl der Eingänge für Anforderungssignale.

Es kann für einen Prozesor unter gewissen Umständen sehr wichtig sein, daß alle seine Anforderungen für eine gewisse Zeitdauer mit höchster Priorität angenommen werden, weil beispielsweise ein vorgeschalteter Datenpuffer gefüllt ist und möglichst schnell entleert werden muß. Eine solche bevorzugte Prioritätszuweisung ist jedoch nur möglich, wenn der betreffende Prozessor die besondere Dringlichkeit seiner Anforderung durch ein zusätzliches Begleitsignal melden kann. Im folgenden wird angenommen, daß alle beteiligten Prozessoren dazu in der Lage sind. Obgleich angenommen werden darf, daß solche Ausnahmezustände vergleichsweise selten eintreten werden, können Kollisionen nicht ausgeschlossen werden.

Der Erfindung liegt die Aufgabe zugrunde, eine Prioritätsauswahleinrichtung so auszubilden, daß einer Anforderung, deren Anforderungssignal von einem die besondere Dringlichkeit der Anforderung kennzeichnenden Verriegelungssignal begleitet ist, die höchste Priorität zugeordnet wird. Die Lösung dieser Aufgabe ergibt sich aus den Merkmalen in kennzeichnenden Teil des Patentanspruchs 1.

Im folgenden wird die Erfindung anhand der Zeichnung näher beschrieben. Es zeigt:

Fig. 1 eine Prioritätsauswahleinrichtung mit dynamisch vertauschbarer Zuordnung der Prioritätsreihenfolge zu den einzelnen Operationsanforderungen bzw. zu den Prozessoren, von denen die Anforderungen ausgehen,

Fig. 2 ein Zeitdiagramm,

Fig. 3 eine Ergänzung der Einrichtung nach Fig. 1 zur zeitweiligen Zuweisung der höchsten Priorität an einen Prozessor.

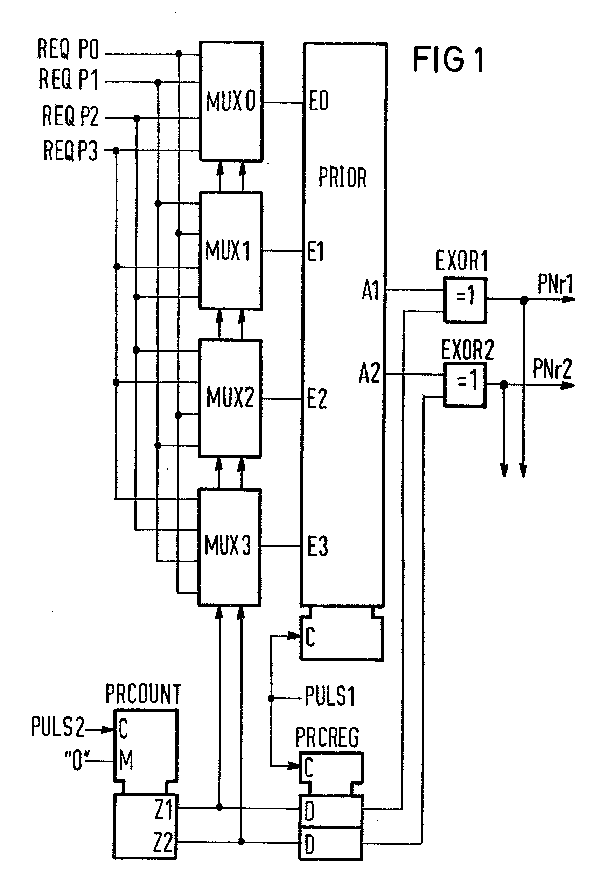

Die in Fig. 1 dargestellte Prioritätsauswahleinrichtung ist der aus US-A-3 798 591 bekannten Einrichtung weitgehend ähnlich. Beide Ausführungsbeispiele gehen davon aus, daß vier Prozessoren vorhanden sind, die Operationsanforderungen an eine zentrale Steuerung richten können. Jeder Prozessor P0 bis P3 bekundet seine Absicht, zu der zentralen Steuerung, beispielsweise zu einem zentralen Speicher zuzugreifen, mit einem Anforderungssignal REQP0 bis REQP3.

Der Voraussetzung gemäß weist ein Prioritätsnetzwerk PRIOR vier Eingänge E0 bis E3 für die Anforderungssignale und zwei Ausgänge A1 und A2 auf. Die ansteigende Flanke eines ersten Impulses PULS1 führt zur Verriegelung der Eingänge und zur Auswahl des zu diesem Zeitpunkt an dem Eingang mit der relativ höchsten Priorität anliegenden Anforderungssignals. Das gilt auch, wenn nur ein Anforderungssignal vorliegt. Absolut gesehen ist dem Eingang E0 die höchste, dem Eingang E3 die niedrigste Priorität zugewiesen.

Die im folgenden in gleicher Weise benannten Signale an den Ausgängen A1 und A2 des Prioritätsnetzwerkes PRIOR bezeichnen in binärer Codierung die Nummer des Eingangs, an den das ausgewählte Anforderungssignal anliegt.

Wie aus der Fig. 1 ersichtlich, liegen die von den (nicht dargestellten) anfordernden Elementen

ausgegebenen Anforderungssignale REQP0 bis REQP3 nicht unmittelbar an den Eingängen E0 bis E3 des Prioritätsnetzwerkes PRIOR an, sondern werden über vier parallel gesteuerte Multiplexer MUX0 bis MUX3 in jeweils veränderter Reihenfolge aufgeschaltet. Die Steuerung der Multiplexer MUX0 bis MUX3 geschieht parallel durch die Signale an den Stufenausgängen eines zweistufigen Binärzählers PRCOUNT, d. h. es werden gleichzeitig alle ersten, zweiten, dritten oder vierten Eingänge der Multiplexer MUX0 bis MUX3 auf deren Ausgänge bzw. auf die Eingänge E0 bis E3 des Prioritätsnetzwerkes PRIOR durchgeschaltet. Durch die wechselnde Aufschaltung der Anforderungssignale REQP0 bis REQP3 auf die Eingänge der einzelnen Multiplexer MUX0 bis MUX3 wird eine von dem jeweiligen Stand des Binärzählers PRCOUNT abhängige Prioritätszuordnung für die Anforderungssignale erreicht. Einen Überblick über diese Abhängigkeit gibt die nachstehende Tabelle, bei deren Betrachtung zu beachten ist, daß das Prioritätsnetzwerk PRIOR lediglich die Priorität seiner mit Anforderungssignalen beaufschlagten Eingänge untereinander bewertet. Es wurde schon darauf hingewiesen, daß der Eingang E0 die höchste Priorität hat.

| Zählerstand PRCOUNT | | REQPx | Eingang PRIOR |
|---|---|---|---|
| 0 | 0 | 0 | E0 |
|   |   | 1 | E1 |
|   |   | 2 | E2 |
|   |   | 3 | E3 |
| 0 | 1 | 0 | E1 |
|   |   | 1 | E0 |
|   |   | 2 | E3 |
|   |   | 3 | E2 |
| 1 | 0 | 0 | E2 |
|   |   | 1 | E3 |
|   |   | 2 | E0 |
|   |   | 3 | E1 |
| 1 | 1 | 0 | E3 |
|   |   | 1 | E2 |
|   |   | 2 | E1 |
|   |   | 3 | E0 |

Da als Ergebnis der Prioritätsauswahl allein die Nummer des ausgewählten Anforderungssignals bzw. des ausgewählten Prozessors interessiert, das Prioritätsnetzwerk PRIOR aber nur die Nummer desjenigen seiner Eingänge E0 bis E3 liefert, an den das ausgewählte Anforderungssignal anliegt und eine feste Zuordnung der Nummern nicht mehr besteht, muß eine vom Stand des Binärzählers PRCOUNT abhängige Korrektur vorgenommen werden. Zu diesem Zweck wird der für die Prioritätszuweisung maßgebende Zählerstand Z1, Z2 des Binärzählers PRCOUNT gleichzeitig mit der Aktivierung des Prioritätsnetzwerkes PRIOR durch die ansteigende Flanke des Impulses PULS1 in ein Register PRCREG übernommen, dessen Ausgänge mit den ersten Eingängen von zwei EXCLUSIV-ODER-Gliedern EXOR1 und EXOR2 verbunden sind. Die zweiten Eingänge der EXCLUSIV-ODER-Glieder EXOR1 und EXOR2 sind an die Ausgänge A1, A2 des Prioritätsnetzwerks PRIOR angeschlossen. An den Ausgängen der EXCLUSIV-ODER-Glieder EXOR1 und EXOR2 liegen Signale PNr1 und PNr2 an, welche die Nummer des ausgewählten Anforderungssignals in binärer Codierung angeben.

Das Weiterschalten des Binärzählers PRCOUNT jeweils um einen Zählschritt zur Vorbereitung einer erneuten Prioritätsentscheidung geschieht durch einen zweiten Impuls PULS2. Der zweite Impuls PULS2 könnte an sich unmittelbar nach der Eingabe des bisherigen Zählerstandes in das Register PRCREG bzw. nach der Aktivierung des Prioritätsnetzwerkes PRIOR, womit auch dessen Eingänge gegen Änderungen der Signalzustände verriegelt werden, auftreten. Aus Gründen, auf die später noch eingegangen wird, ist es zweckmäßig, den zweiten Impuls PULS2 gegen den ersten Impuls PULS1 so lange (ca. 20 ns) zu verzögern, bis die Prioritätsentscheidung an den Ausgängen der EXCLUSIV-ODER-Glieder EXOR und EXOR2 unter Berücksichtigung interner Signallaufzeiten und Einschwingvorgänge, insbesondere im Prioritätsnetzwerk PRIOR, als gültig anerkannt werden.

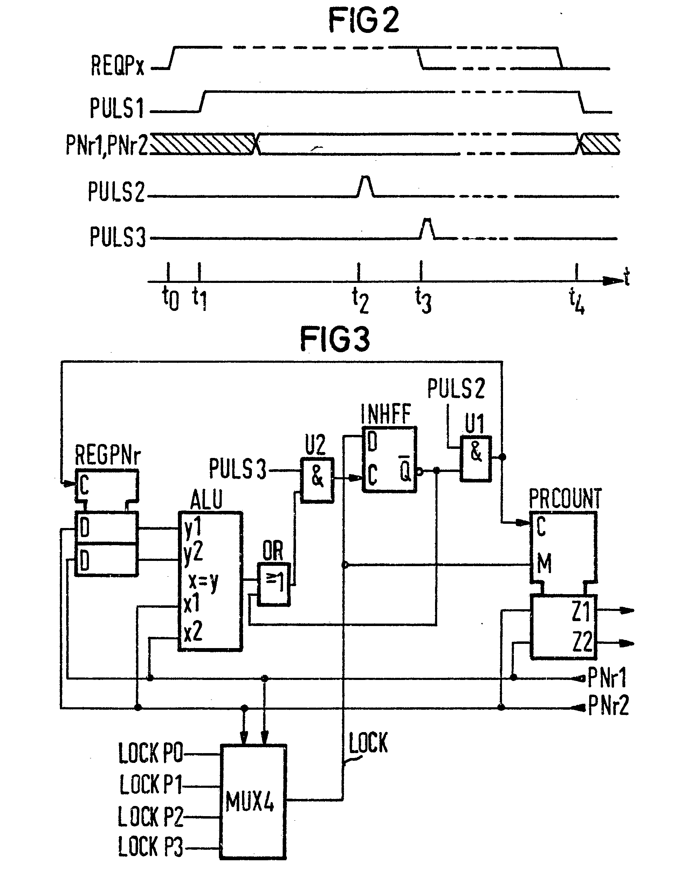

Die Fig. 2 zeigt ein Zeitdiagramm, aus dem schematisch die zeitliche Lage der Impulse PULS1 und PULS2 ersichtlich ist. Vorläufig wird angenommen, daß zunächst kein gültiges Anforderungssignal vorliegt und mindestens ein solches erst zum Zeitpunkt $t_0$ eingeht. Damit wird in einem nicht dargestellten Impulsgeber die Ausgabe des ersten Impulses PULS1 zum Zeitpunkt $t_1$ angestoßen. Der erste Impuls PULS1 dauert so lange an, bis die von der ausgewählten Anforderung ausgelöste Operation abgeschlossen oder wenigstens so weit fortgeschritten ist, daß sie von einer folgenden Prioritätsentscheidung nicht mehr gestört werden kann. Während der gleichen Zeitspanne, d. h. bis zum Zeitpunkt $t_4$ sind die Eingänge E0 bis E3 des Prioritätsnetzwerkes PRIOR verriegelt.

Wesentlich kürzer darf der zum Zeitpunkt $t_2$ erzeugte zweite Impuls PULS2 sein, da er nur als Taktimpuls zum Weiterschalten des Binärzählers PRCOUNT dient. Ein im Zeitpunnkt $t_3$ auftretender, gleichfalls nur kurzer dritter Impuls PULS3 wird in der bisher beschriebenen Prioritätsauswahleinrichtung nicht verwendet und kann daher zunächst außer Betracht bleiben.

Trifft eine neue Anforderung erst nach dem Ende des durch ein vorausgehendes Anforderungssignal ausgelösten ersten Impulses PULS1 ein, dann startet das die neue Anforderung begleitende Anforderungssignal den Impulsgeber in der beschriebenen Weise. Im allgemeinen liegt jedoch bereits vor diesem Zeitpunkt eine weitere Anforderung vor. In diesem Falle wird der erste Impuls PULS1 aus dem laufenden Auswahlzyklus entsprechend den angegebenen Kriterien beendet und der Impulsgeber zur Erzeugung des ersten, zweiten und dritten Impulses PULS1 bis PULS3 wird nach einer festgelegten Wartezeit erneut gestartet.

Die Fig. 3 zeigt eine erfindungsgemäße Erweiterung der Prioritätsauswahleinrichtung nach Fig. 1, mit deren Hilfe einer Anforderung, die von einem die Dringlichkeit dieser Anforderung kennzeichnenden Signal begleitet wird, für die Dauer dieses »Verriegelungssignals« die höchste Priorität zugewiesen wird. Die Zuweisung der höchsten Priorität erfolgt jedoch erst dann, wenn die betreffende Anforderung unter Berücksichtigung der dynamischen Prioritätsvertauschung ohnehin angenommen wird.

Die Ausgänge der beiden EXCLUSIV-ODER-Glieder EXOR1 und EXOR2 (Fig. 1), an denen die Bits PNr1 und PNr2 zur Kennzeichnung der Nummer der zuletzt ausgewählten Anforderung anliegen, sind mit den Eingängen zur Voreinstellung des Binärzählers PRCOUNT, mit den Steuereingängen eines weiteren Multiplexers MUX4, mit den Eingängen x1, x2 eines Vergleichers ALU und mit den Dateneingängen eines Registers REGPNr verbunden.

Es wird nun angenommen, daß diese eben ausgewählte Anforderung REQPx von einem Verriegelungssignal LOCKPx mit dem binären Wert »1« begleitet ist. Das Verriegelungssignal LOCKPx liegt an einem der Eingänge des Multiplexers MUX4 an, derart, daß es unter Steuerung der betreffenden Anforderungsnummer auf den Ausgang des Multiplexers MUX4 als Steuersignal LOCK durchgeschaltet wird und damit am Steuereingang M zur Steuerung der Funktion des Binärzählers PRCOUNT sowie am Dateneingang einer Kippstufe INHFF anliegt. Der invertierende Ausgang $\bar{Q}$ der Kippstufe INHFF führt jedoch zunächst noch den binären Wert »1«, so daß der nunmehr eintreffende zweite Impuls PULS2 die Torschaltung U1 passieren kann. Indessen verhindert das Steuersignal LOCK das Hochzählen des Binärzählers PRCOUNT und bewirkt dafür die parallele Übernahme der Anforderungsnummer PNr1, PNr2 in den Binärzähler PRCOUNT durch den zweiten Impuls PULS2. Gleichzeitig wird die Anforderungsnummer in das Register REGPNr übernommen. Es ist nun leicht einzusehen, daß der zweite Impuls PULS2 erst entstehen darf, wenn die eine ausgewählte Anforderung kennzeichnenden Signale PNr1 und PNr2 an den Ausgängen der EXCLUSIV-ODER-Glieder EXOR1 und EXOR2 (Fig. 1) stabil sind.

Der binäre Wert »1« am invertierenden Ausgang $\bar{Q}$ der Kippstufe INHFF durchsetzt das ODER-Glied OR und hält die Torschaltung U2 für den nun folgenden, schon erwähnten dritten Impuls PULS3 offen. Mit diesem Impuls wird das Steuersignal LOCK in die Kippstufe INHFF eingespeichert. Damit wird die Torschaltung U1 für spätere zweite Impulse PULS2 gesperrt.

Die Auswirkungen eines in Verbindung mit einem Anforderungssignal eingehenden Verriegelungssignals seien an einem willkürlich herausgegriffenen Beispiel aufgezeigt. Bei einem Zählerstand 01 möge das Anforderungssignal REQP3 zusammen mit dem Verriegelungssignal LOCKP3 sowie das Anforderungssignal REQP2 ohne Verriegelungssignal vorliegen. Entsprechend dem vorgegebenen Zählerstand werden das Anforderungssignal REQP3 auf den Eingang E2 und das Anforderungssignal REQP2 auf den Eingang E3 des Prioritätsnetzwerkes PRIOR durchgeschaltet. Das Anforderungssignal REQP3 hat also im Augenblick die höhere Priorität und setzt sich durch. An den Ausgängen des Prioritätsnetzwerkes PRIOR erscheint die Nummer des betreffenden Eingangs E2 mit A1 = 0 und A2 = 1. Durch die EXCLUSIV-ODER-Verknüpfung mit dem Zählerstand Z1 = 1, Z2 = 0 ergibt sich daraus

4

PNr1 = 1 und PNr2 = 1, was bekanntlich der Dezimalzahl 3 entspricht.

Mit dieser Anforderungsnummer wird im Multiplexer MUX4 das Verriegelungssignal LOCKP3 durchgeschaltet und sie wird in den Binärzähler PRCOUNT als neuer Zählerstand Z1 = 1, Z2 = 1 eingegeben. Damit wird ein nachfolgendes Anforderungssignal REQP3 auf den Eingang E0 des Prioritätsnetzwerks PRIOR, d. h. auf den Eingang mit der höchsten Priorität, durchgeschaltet.

Die Zuweisung der höchsten Priorität für Anforderungen mit einer bestimmten Nummer schließt die Auswahl anderer Anforderungen nicht aus. Es ist nämlich möglich, daß aus Gründen, die hier nicht untersucht werden sollen, zwischen zwei bevorrechtigten Anforderungen trotz der vorausgesetzten besonderen Dringlichkeit solche zeitlichen Abstände eintreten, daß dazwischen andere Anforderungen angenommen werden können.

Die Zulassung von Anforderungen mit niedrigerer Priorität ohne Verriegelungssignal führt jedoch noch nicht zur Aufhebung der bestehenden Verriegelung der Prioritätsauswahleinrichtung, da der Vergleicher ALU für eine solche Anforderung $x \neq y$ feststellt und die Torschaltung U2 für den dritten Impuls PULS3 sperrt.

Die Entriegelung wird dagegen eingeleitet durch eine Anforderung REQPx aus der Serie der bisher als besonders dringlich bezeichneten und daher mit der höchsten Priorität ausgestatteten Anforderungen, die als erste nicht mehr von einem Verriegelungssignal LOCKPx = 1 begleitet ist. Zwar ist auch dieser einen Anforderung noch die höchste Priorität zugewiesen, weil in dem dafür maßgebenden Zeitpunkt $t_1$, d. h. bei Beginn des ersten Impulses PULS1 die Verriegelung noch besteht. Mit der Ausgabe der zugehörigen Anforderungsnummer an den Ausgängen der EXCLUSIV-ODER-Glieder EXOR1, EXOR2 stellt der Vergleicher ALU ihre Übereinstimmung mit der im Register REGPNr gespeicherten Anforderungsnummer durch Ausgabe einer binären »1« fest. Damit wird die Torschaltung U2 für den Durchgang eines dritten Impulses PULS3 geöffnet. Da auch das einem Verriegelungssignal entsprechende Steuersignal LOCK fehlt, d. h. den binären Wert »0« aufweist, wird die Kippstufe INHFF zurückgesetzt und die Torschaltung U1 für die zweiten Impulse PULS2 durchlässig gesteuert. Der Binärzähler PRCOUNT ist wieder auf Zählen umgestellt.

## Patentansprüche

1. Prioritätsauswahleinrichtung zur Auswahl einer an eine zentrale Steuerung gerichteten Operationsanforderung aus mehreren gleichzeitig vorliegenden Operationsanforderungen, wobei jede Operationsanforderung mindestens aus einem Anforderungssignal (REQP0 bis REQP3) besteht, bzw. von einem Anforderungssignal begleitet ist, mit einem Prioritätsnetzwerk (PRIOR), dessen Eingängen unterschiedliche Prioritäten fest zugeordnet sind und dessen Ausgangssignale die Nummer des Eingangs in binärer Codierung bezeichnen, an dem ein ausgewähles Eingangssignal anliegt, mit Multiplexern (MUX0 bis MUX3) zur zyklisch vertauschbaren Durchschaltung der Anforderungssignale (REQP0 bis REQP3) auf die Eingänge des Prioritätsnetzwerkes (PRIOR), mit einem nach Abschluß einer Prioritätsentscheidung um eine Zähleinheit weitergeschalteten Binärzähler (PRCOUNT) zur Steuerung der Multiplexer (MUX0 bis MUX3), mit einem Register (PRCREG), in das der jeweilige Zählerstand gleichzeitig mit der Aktivierung des Prioritätsnetzwerks (PRIOR) mit dem Beginn eines ersten Impulses (PULS1) übernommen wird, mit EXCLUSIV-ODER-Gliedern (EXOR1, EXOR2), deren Eingänge jeweils mit einem Ausgang des Prioritätsnetzwerks (PRIOR) und mit einem Ausgang des Registers (PRCREG) verbunden sind und deren Ausgänge (PNr1, PNr2) Signale zur Kennzeichnung der Nummer des ausgewählten Anforderungssignals (REQP0 bis REQP3) bzw. der Nummer eines das Anforderungssignal aussendenden Elements in binärer Codierung führen, gekennzeichnet durch folgende Merkmale:

a) die Ausgänge der EXCLUSIV-ODER-Glieder (EXOR1, EXOR2) sind mit Eingängen zur Voreinstellung des Binärzählers (PRCOUNT), mit den Eingängen eines zweiten Registers (REGPNr) und mit einer ersten Gruppe (x1, x2) von Eingängen eines Vergleichers (ALU) verbunden, deren zweite Gruppe (y1, y2) von Eingängen an die Ausgänge des zweiten Registers (REGNr) angeschlossen ist,

b) ein das gerade ausgewählte Anforderungssignal (REQPx) begleitendes Verriegelungssignal (LOCKPx) steuert die Eingabe der Nummer (PNr1, PNr2) dieses Anforderungssignals in den Binärzähler (PRCOUNT) durch einen nach Abschluß einer vorhergehenden Prioritätsentscheidung ausgelösten zweiten Impuls (PULS2), gleichzeitig wird die Nummer des Anforderungssignals in das zweite Register (REGPNr) übernommen,

c) das Verriegelungssignal (LOCKPx) wird durch einen dritten Impuls (PULS3) in eine Kippstufe (INHFF) übernommen und sperrt damit den zweiten Impuls (PULS2) so lange, bis das Anforderungssignal (REQPx) erstmals nach Beendigung des Verriegelungssignals (LOCKPx) wieder ausgewählt wird.

2. Prioritätsauswahleinrichtung nach Anspruch 1, dadurch gekennzeichnet, daß folgende Verbindungen vorliegen: Ausgang des Vergleichers (ALU) mit dem ersten Eingang eines ODER-Glieds (OR), invertierender Ausgang der Kippstufe (INHFF) mit dem Steuereingang einer Torschaltung (U1) für den zweiten Impuls (PULS2) und mit dem zweiten Eingang des ODER-Glieds (OR), Ausgang des ODER-

5

Glieds (OR) mit dem Steuereingang einer Torschaltung (U2) für den dritten Impuls (PULS3), Ausgang der zweiten Torschaltung (U2) mit dem Takteingang der Kippstufe (INHFF), an deren Dateneingang gleichfalls das Verriegelungssignal (LOCKPx) anliegt.

## Claims

1. A priority selection device for the selection of an operation request, directed to a central control unit, from a plurality of simultaneously occurring operation requests, where each operation request at least comprises a request signal (REQP0 to REQP3) or is accompanied by a request signal, with a priority network (PRIOR) whose inputs are permanently assigned different priorities and whose output signals designate in binary coding the number of the input at which a selected input signal is present, with multiplexers (MUX0 to MUX3) for the cyclically changeable switch-through of the request signals (REQP0 to REQP3) to the inputs of the priority network (PRIOR), with a binary counter (PRCOUNT) which is switched on by one counting unit following the conclusion of a priority decision and which serves to control the multiplexers (MUX0 to MUX3), with a register (PRCREG) into which the count in question is transferred simultaneously of the activation of the priority network (PRIOR) at the beginning of a first pulse (PULS1), with EXCLUSIVE-OR-gates (EXOR1, EXOR2), whose inputs are each connected to an output of the priority network (PRIOR) and to an output of the register (PRCREG) and whose outputs (PNr1, PNr2) carry in binary coding signals for the characterisation of the number of the selected request signal (REQP0 to REQP3) and the number of an element which is transmitting the request signal characterised by the following features:

a) the outputs of the EXCLUSIVE-OR-gates (EXOR1, EXOR2) are connected to inputs for the pre-setting of the binary counter (PROUNT), to the inputs of a second register (REGPNr), and to a first group (x1, x2) of inputs of a comparator (ALU) whose second group (y1, y2) of inputs is connected to the outputs of the second register (REGNr),

b) a locking signal (LOCKPx) which accompanies the currently selected request signal (REQPx) controls the input of the number (PNr1, PNr2) of this request signal into the binary counter (PRCOUNT) by a second pulse (PULS2) which is triggered following the conclusion of a preceding priority decision, and simultaneously the number of the request signal is transferred into the second register (REGPNr),

c) the locking signal (LOCKPx) is transferred by a third pulse (PULS3) into a flip-flop (INHFF) and thus blocks the second pulse (PULS2) until the request signal (REQPx) is selected again for the first time at the end of the locking signal (LOCKPx).

2. A priority selection device as claimed in claim 1, characterised in that the following connections exist: the output of the comparator (ALU) is connected to the first input of an OR-gate (OR), the inverting output of the flip-flop (INHFF) ist connected to the control input of a gate circuit (U1) for the second pulse (PULS2) and to the second input of the OR-gate (OR), the output of the OR-Gate (OR) is connected ot the control input of a gate circuit (U2) for the third pulse (PULS3), the output of the second gate circuit (U2) is connected to the clock pulse input of the flip-flop (INHFF) at whose data input the locking signal (LOCKPx) is likewise present.

## Revendications

1. Dispositif de sélection de priorités servant à sélectionner une demande d'opération, adressée, à un dispositif central de commande et faisant partie de plusieurs demandes d'opérations présentes simultanément et dont chacune est constituée au moins par un signal de demande (REQP0 à REQP3) ou est accompagnée par un signal de demande, et comportant un réseau de priorités (PRIOR), aux entrées duquel sont associées de façon fixe différentes priorités et dont les signaux de sortie désignent, selon le codage binaire, le numéro de l'entrée à laquelle un signal d'entrée sélectionné est appliqué, des multiplexeurs (MUX0 à MUX3) servant à transmettre directement, d'une manière pouvant être permutée de façon cyclique, les signaux de demandes (REQP0 à REQP3) en direction des entrées du réseau de priorités (PRIOR), un compteur binaire (PRCOUNT) avancé d'une unité de comptage à la fin d'une décision de priorité et servant à commander les multiplexeurs (MUX0 à MUX3), un registre (PRCREG), dans lequel l'état respectif de comptage est transféré en même temps qu'intervient l'activation du réseau de priorités (PRIOR), au début d'une première impulsion (PULS1), comportant des circuits OU-EXCLUSIF (EXOR1, EXOR2) dont les entrées sont reliées respectivement à une sortie du réseau de priorités (PRIOR) et à une sortie du registre (PRCREG) et dont les sorties (PNr1, PNr2) livrent des signaux codés en binaire et servant à caractériser le numéro du signal de demande sélectionné (REQP0 à REQP3) au numéro d'un élément émettant le signal de demande, caractérisé par les caractéristiques suivantes:

**0 069 886**

a) les sorties des circuits OU-EXCLUSIF (EXOR1, EXOR2) sont reliés aux entrées servant au préréglage du compteur binaire (PRCOUNT), aux entrées d'un second registre (REGPNr) et à un premier groupe (x1, x2) d'entrées d'un comparateur (ALU), dont le second groupe (y1, y2) d'entrées est raccordé au second registre (REGPNr),

b) un signal de verrouillage (LOCKPx) accompagnant le signal précisément sélectionné de demande (REQPx) commande l'introduction du numéro (PNr1, PNr2) de ce signal de demande dans le compteur binaire (PRCOUNT) au moyen d'une seconde impulsion (PULS2) déclenchée après la fin d'une décision précédente de priorité, et simultanément le numéro du signal de demande est transféré dans le second registre (REGPNr),

c) le signal de verrouillage (LOCKPx) est transféré par une troisième impulsion (PULS3) dans un étage à bascule (INHFF) et bloque par conséquent la seconde impulsion (PULS2) tant que le signal de demande (REQPx) est à nouveau sélectionné pour la première fois après la fin du signal de verrouillage (LOCKPx).

2. Dispositif de sélection de priorités suivant la revendication 1, caractérisé par le fait que les liaisons suivantes sont présentes: liaison de la sortie du comparateur (ALU) à la première entrée d'un circuit OU (OR), liaison de la sortie inverseuse de l'étage à bascule (INHFF) à l'entrée de commande d'un circuit de porte (U1) pour la seconde impulsion (PULS2) et à la seconde entrée du circuit OU (OR), liaison de la sortie du circuit OU (OR) à l'entrée de commande d'un circuit de porte (U2) pour la troisième impulsion (PULS1), liaison de la sortie du second circuit de porte (U2) à l'entrée de cadence de l'étage à bascule (INHFF), à l'entrée de données duquel est également appliqué le signal de verrouillage (LOCKPx).

7

FIG 1

# FIG 2

# FIG 3